# EUROPEAN PATENT APPLICATION

(11) **EP 4 342 286 A1**
(43) Date of publication of application: **27.03.2024**
(21) Application number: 23199240.5
(22) Date of filing: 22.09.2023
(51) Int. Cl.: A01G 13/02, A01G 13/10

(54) **TREE SHELTER**

(30) Priority: 22.09.2022 GB 202213856
(71) Applicant: Rainbow Professional Limited, Hull HU2 OP (GB)
(72) Inventor: Talpe, Alexandre, HULL, HU6 7LJ (GB); Talpe, Pierre, HULL, HU6 7LJ (GB)
(74) Representative: Loven, Keith James

(57) **Abstract**

A method of making tree shelters comprises mixing a soil biodegradable resin with wood particles, extruding the resulting mixture through an annular die to form a tube, allowing the resin to cure, and then cutting the extruded tube into predetermined lengths to form tree shelters.

## Description

### Field of the Invention

This invention relates to a method of making a tree shelter, for example for protecting newly-planted tree saplings.

### Background to the Invention

It is common to use tree shelters to protect newly-planted saplings from damage by animals or by weather while the root system becomes established. Tree shelters typically take the form of a plastics tube which are typically supported by a separate stake. The shelters can also provide a beneficial effect on growth by creating a beneficial micro-climate around the stem and may serve to protect the plant from sprays used for weed-control in the vicinity.

A problem with the use of some plastics in forming tree shelters is that they can take a long time to break down when no longer required to protect the sapling, and the mechanism for the breakdown in many cases was simply degradation of the plasticisers, resulting in the plastic becoming brittle and eventually breaking down into particles which can enter water courses and ultimately the sea. The unsightly remnants of tree shelters can litter the landscape for many years.

There have been proposals for making biodegradable tree shelters. Some early developments have not been proved to be biodegradable according to internationally accepted standards for biodegradable products to degrade in soil, marine or freshwater, the environments where the shelter may end its life. For example, GB2586914 discloses a shelter formed from a wool fibre substrate and a matrix of a natural binder, for example a plant-based polyol. The material is formed as a flat sheet and then shaped into a tube with a double-thickness overlapping portion along the length.

It is desirable to form the tubes by an extrusion process, since this enables a quicker rate of production, but wool and other fibres cannot readily be extruded. Additionally, wood accelerates degradation and creates a natural appearance, blending uniquely into the natural environment.

### Summary of the Invention

According to the invention, there is provided a method of making tree shelters, comprising mixing a soil biodegradable resin with wood particles, extruding the resulting mixture through an annular die to form a tube, allowing the resin to cure, and then cutting the extruded tube into predetermined lengths to form tree shelters.

Other features of the invention are set out in the claims.

The wood promotes biodegradation of the shelter and helps create a natural appearance, to ensure the shelter of the invention blends in perfectly in its surroundings and around the tree. The shelter has the additional benefit of being safe in marine and freshwater environments. A tensile strength test according to ISO527-2 standard has shown only moderate loss in tensile strength after 3 years of protection, and has also shown that the term can be extended by adjusting the thickness. The material of the shelter degrades into materials which can break down or compost in the soil to provide nutrients for other neighbouring plants, the use of wood ensuring that the appearance of the degrading shelters is natural-looking and therefore inconspicuous in the landscape.

### Brief Description of the Drawings

In the drawings, which illustrate an exemplary embodiment of the tree shelter produced by the method of the invention:

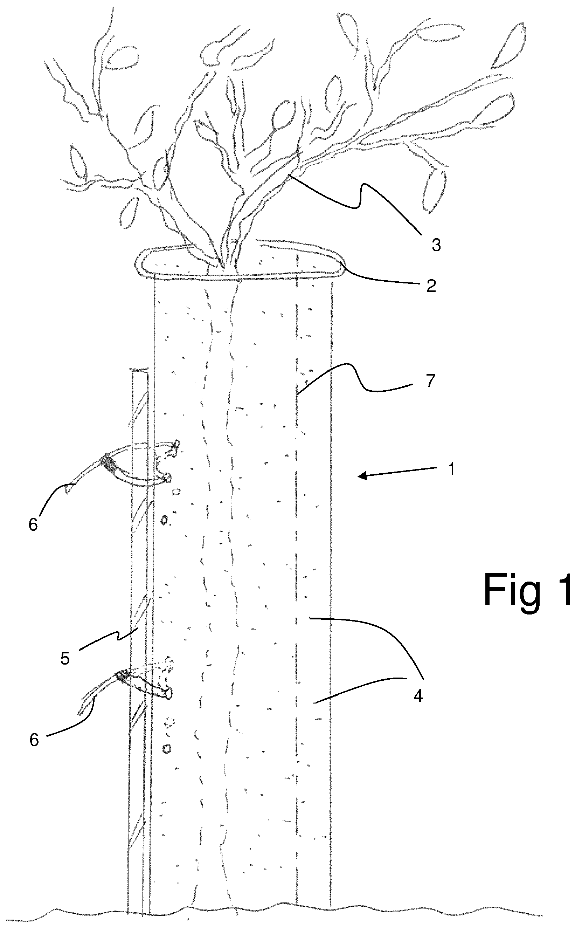

Figure 1 illustrates the tree shelter in use;

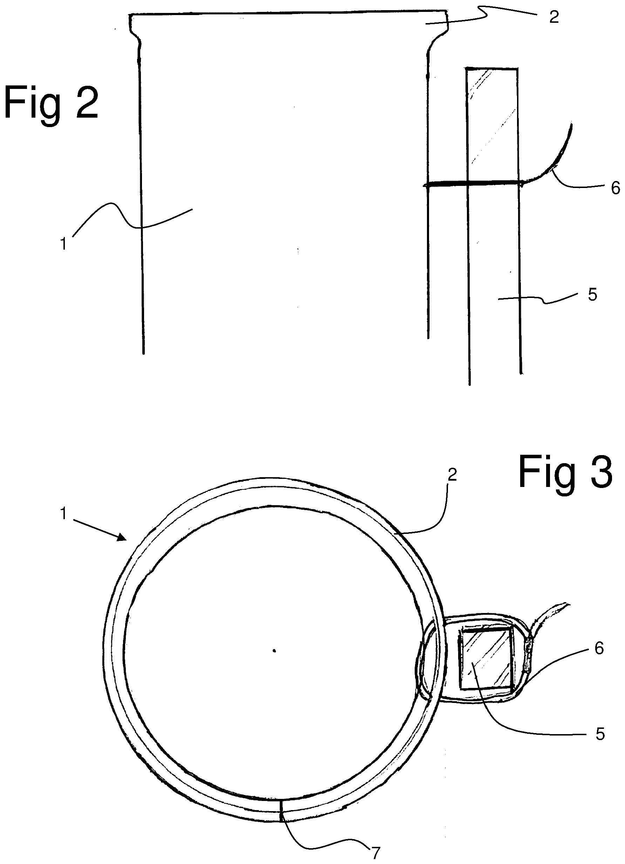

Figure 2 is an enlarged view of the upper portion of the shelter; and
Figure 3 is a top plan view of the shelter corresponding to Figure 2.

### Detailed Description of the Illustrated Embodiment

The tree shelter comprises a tube 1, open at each end and with one end 2 flared outwardly to a small degree to avoid damage to the sapling 3 which it surrounds. The tube has small holes 4 through the wall thereof to provide ventilation within the growing space the shelter encloses. A wooden stake 5 is driven into the ground adjacent to the shelter to stabilise it, ties 6 being used to attach the shelter to the stake. The ties are suitably formed of a biodegradable material, for example twine formed from natural fibres.

The shelter is formed by extruding a mixture of a plant-based hardenable resin and wood particles, suitably containing from 8% to 12 % by weight of wood, preferably 10%, through an annular die to form an endless tube. The tube is then perforated to produce the holes 4, and through blades which cut a perforated line 7 along the length of the tube to provide a weakened section which can readily separate when growth of the tree is such as to exceed the diameter of the tube. The extruded tube is then cut into portions of suitable length for a tree shelter, for example approximately 1.2 or 1.5m. Finally, a heated die is pressed into one end of each of the cut portions to produce the flared end 2.

The tree shelter is manufactured from PEFC accredited sustainable sourced wood flour and/or particles and from certifiably soil-biodegradable resin, for example a polyhydroxyalkanoate resin. Other biodegradable resins may be used.

The tree shelter is single-walled and the walls need to exceed 0.3mm to ensure an acceptable life span, preferably 0.5mm to 1mm, more preferably at least 0.6mm in thickness. Greater thicknesses can be used to extend the life of the shelter, depending on the environment in which it is to be used. As is the case for a conventional shelter, the tree shelter needs to be at least 50% translucent, which promotes growth in the shelter later after. Ideally the product is even more light translucent. Ideally, the product retains its light translucency over time (does not darken heavily), as this also promotes healthy stem development. The shelter also has 2 or more sets of 2 perforated fixing holes which allows for a tie to be inserted, allowing the shelter to be tied to the stake 5.

Some biopolymers or biodegradable polymers have been designed to have a thermoplastic look & feel. While this is useful in for example packaging applications, this is less suitable in outdoor applications where the natural look & feel of the environment has to be preserved, especially given these shelters are often 1.2 or 1.5m high. The wood flour and/or particles ensure the shelter blends in exceptionally well in the environment and mimics the wood, combined with the best technical and adding to biodegradable features, and a whilst retaining the translucency.

Therefore, the applicants have created a unique mix with waste residues of UK PEFC based wood. This creates a beautiful transparent/light brown product that looks very natural (woody) in the forest and is additionally helpful to further enhance composting features of the material when degrading. The product may also have visible little wooden particles, making it a bit rougher and mimicking wood type environments even more. It can withstand temperature differences from -10°C to over 100°C. It has excellent light transmission, and the mechanical properties have been tested for three years.

## Claims

1. A method of making tree shelters having a translucency of at least 50%, comprising mixing a soil biodegradable plant-based resin with from 8% by weight to 12% by weight of wood particles having a maximum dimension of 3mm, at least some of the wood particles being in the form of wood flour, extruding the resulting mixture through an annular die to form a tube having a thickness of from 0.5 to 1mm, allowing the resin to cure, and then cutting the extruded tube into predetermined lengths to form tree shelters.

2. A method according to Claim 1, wherein the extruded thickness of the tube is at least 0.6mm.

3. A method according to Claim 1 or 2, wherein the mixture comprises 10% by weight of wood particles.

4. A method according to Claim 1, 2 or 3, wherein the resin is a polyhydroxyalkanoate resin.

5. A method according to any preceding claim, comprising a shaping step to form an outward flare in one end of each cut length of extruded tube.

6. A method according to any preceding claim, comprising forming a line of reduced strength along the extruded tube.

7. A method according to Claim 6, wherein the line of reduced strength comprises a longitudinal line of slits in the extruded tube.

8. A method according to any preceding claim, wherein each shelter is provided with holes therethrough for attachment of ties, in use.

9. A method according to any preceding claim, comprising the step of forming ventilation holes through and around the periphery of the extruded tube at predetermined intervals along its length.
